# EUROPÄISCHE PATENTSCHRIFT

(11) **EP 1 101 697 B1**
(45) Veröffentlichungstag und Bekanntmachung des Hinweises auf die Patenterteilung: **08.02.2006**
(21) Anmeldenummer: 00811033.0
(22) Anmeldetag: 06.11.2000
(51) Int. Cl.: B64D 17/72, A62B 35/00

(54) **Tragbare Sicherheitsvorrichtung für Personen mit im Gefahrfall automatisch entfaltender Luftbremse**
Wearable safety system for persons, with air brake unfolding itself automatically in case of danger
Sytème de sécurité portable pour personnes avec un frain d'air se dépliant soi-même automatiquement en cas de danger

(30) Priorität: 15.11.1999 EP 99811048
(43) Veröffentlichungstag der Anmeldung: 23.05.2001
(73) Patentinhaber: FlyBag AG, 8713 Uerikon (CH)
(72) Erfinder: Golero, Roger, 8713 Uerikon (CH)

(56) Entgegenhaltungen:
- DE-U- 29 717 771
- US-A- 1 861 784
- US-A- 4 105 173
- US-A- 4 858 856
- US-A- 5 028 018

## Beschreibung

Die Erfindung bezieht sich auf eine Sicherheitsvorrichtung nach dem Oberbegriff des unabhängigen Anspruchs 1. Solche Systeme sind z. B. And der US-A-4, 858, 856 bekannt. Schutzsysteme schützen Personen vor Verletzungen beispielsweise beim Fall aus grosser und geringer Höhe von nur wenigen Metern vor Schaden und Verletzung.

Bei bekannten Systemen für den Schutz von Personen vor Stürzen aus geringen Höhen, trägt die zu sichernde Person beispielsweise einen Gurt an welchem ein Sicherungsseil befestigt ist. Diese Sicherheitsvorrichtungen sind in vielen Fällen schlecht oder gar nicht geeignet. Das Anbinden beim Arbeiten in grosser Höhe auf Dächern, Fassaden und auf Gerüsten kann beim Verwenden eines Sicherungsseils auf Grund der fixen Verbindung des Sicherungsseils mit der zu sichernden Person, sehr umständlich sein. Es besteht die Gefahr, dass die zu sichernde Person sich im Sicherungsseil verheddert und verstrickt und zu Fall kommt, was diese Person erst recht in Gefahr bringt. Beim sich Bewegen ist das immer wieder erforderliche Ordnen der Sicherheitsleine umständlich und zeitraubend. Die umständliche Handhabung derartiger Sicherheitseinrichtungen führt gerade bei Berufsleuten, die es gewohnt sind, in gefährlicher Höhe und Umgebung zu arbeiten dazu, dass die wohl vorhandene Sicherheitsvorrichtung gar nicht eingesetzt wird, weil sie bei der Arbeit zu sehr behindert.

Aufgabe der Erfindung ist es, eine verbesserte Sicherheitsvorrichtung für Personen zu schaffen. Nach der Erfindung wird diese Aufgabe mit einer Sicherheitsvorrichtung gelöst, welche die Merkmale im kennzeichnenden Teil des unabhängigen Anspruchs 1 aufweist. Die abhängigen Ansprüche beziehen sich auf vorteilhafte Ausgestaltungen der Erfindung.

Der Unterschied zu bekannten Systemen besteht u.a. darin, dass dieses auch landbasiert arbeitet d.h. dass auch beim Fall aus nur wenigen Metern, z.B. bei Arbeit direkt über dem Erdboden, wirksamen Schutz bietet, was bedeutet, dass eine von einem Gebäude, Turm, Masten, Baum, von einer Brücke, einer Leiter oder in den Bergen stürzende Person mit der Sicherheitsvorrichtung wirksam geschützt werden kann. Konventionelle Systeme wie Fallschirme, Gleitschirme und dgl. sind nicht in der Lage, sich auf einer kurzen Fallstrecke zu entfalten. Es handelt sich also somit bei der vorliegenden Erfindung um das erste landbasierte System, das aber auch als konventioneller Fallschirm einsetzbar ist.

Die Sicherheitsvorrichtung schützt nicht nur wie bekannte Schutzeinrichtungen Personen, die sich in grösser Hohe über Boden, z.B. in einem Fluggerät befinden, sondern auch Personen, die sich nur wenige Meter, z.B. auf einer Erhöhung, über Boden oder einer sonstigen Landefläche befinden.

Menschen müssen oder wollen sich oft und aus den verschiedensten Gründen der Gefahr eines Absturzes aussetzen, d.h. sich in Situationen begeben wo ein Sturz oder Absturz gefährlich und sogar lebensbedrohend sein kann. Z.T. ist dies durch den Beruf bedingt, z.T. geschieht dies beispielsweise bei sportlichen Tätigkeiten. Die Sicherheitsvorrichtung nach der Erfindung schützt insbesondere Personen, welche die Sicherheitsvorrichtung benutzen vor Verletzungen beim Sturz von Häusern, von Felsen oder von anderen hohen Strukturen, schützt aber auch bei Verletzungsgefahr mit beispielsweise abstürzenden Fluggeräten wie Gleitschirmen oder Deltagleitern.

Die Sicherheitsvorrichtung enthält eine Kombination Steuerelektronik, Airbag-Treibsatz sowie eine Auftrieb erzeugende Luftbremse. Die Luftbremse ist mit Vorteil fallschirmartig ausgebildet. Die prinzipielle Ausgestaltung der Sicherheitsvorrichtung wird mit dem nachfolgenden Schema veranschaulicht.

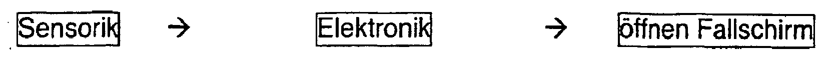

Die Steuerelektronik ist mit einem Beschleunigungs-Sensor verbunden. Dieser Sensor misst permanent oder in Intervallen, ob die Person, welche die Sicherheitsvorrichtung trägt, eine Beschleunigung von beispielsweise mindestens ca. 0.9 g (g = Erdbeschleunigung) erfährt. Dieser Schwellwert für die Beschleunigung kann in Abhängigkeit von der Geschwindigkeit auch variieren. So kann bei höherer Geschwindigkeit der Schwellwert erniedrigt werden. Das bedeutet, dass die Elektronik laufend die Beschleunigungen zu Geschwindigkeiten integrieren und die Geschwindigkeiten zu Distanzen oder Wegen integrieren kann. Basierend auf diesen errechneten Werten bewertet das System den zurückgelegten Weg um festzustellen, ob sich die schützende Person effektiv in einer bedrohlichen Situation befindet und um Fehlauslösungen zu vermeiden. Dieser Weg-Schwellwert kann fix oder variabel wählbar und einstellbar sein. Stellt die Elektronik der Sicherheitsvorrichtung fest, dass die Auslösebedingungen erreicht sind, und dass effektiv der zu schützenden Person die Gefahr droht, Schaden zu nehmen, wird der beispielsweise pyrotechnische Sprengsatz elektrisch gezündet. Dieser hat die Aufgabe, Gas freizusetzen und z.B. aufblasbare und formgebende Kammern oder Rippen der Luftbremse mit diesem Gas zu füllen und damit die fallschirmartige Luftbremse der Sicherheitsvorrichtung einerseits möglichst schnell zu entfalten und anderseits auch dann stabil entfaltet zu halten, wenn sie mit einem gebäudenahen Masten, Baum oder anderen Hindernissen kollidiert. Bisher bekannte Fallschirme fallen in einem solchen Fall in sich zusammen und sind somit als Sicherheitsvorrichtung im Sinne dieser Erfindung nicht geeignet, dies ganz abgesehen davon, dass sich Fallschirme erst nach einer relativ gossen Fallstrecke von vielen Metern öffnen. Der Fallschirm, d.h. die fallschirmartige Luftbremse nach der Erfindung wiederum mildert und bremst den Absturz der Person, welche ohne die Sicherheitsvorrichtung wohl schwere oder gar tödliche Verletzung erleiden würde schon bei einem Fall oder Sturz aus oder über nur wenige Meter.

Die Sicherheitsvorrichtung für Personen ist tragbar und weist eine gefaltete Luftbremse auf. Die Sicherheitsvorrichtung weist einen Treibsatz auf, der mit einem Zündsignal von einer elektrischen Schaltung gezündet wird. Der elektrischen Schaltung wird laufend oder in vorgegebenen Zeitabständen ein Signal eines Sensors, z.B. eines Beschteunigungssensors der Sicherheitsvorrichtung zugeführt. Das Zündsignal wird ausgelöst und der Treibsatz gezündet, wenn das vom Sensor erzeugte und von diesem kommende Signal von der Logik der elektrisch-elektronischen Schaltung als Gefahrensituation erkannt wird, welche das Aktivieren der Sicherheitsvorrichtung verlangt; wenn also die vom Beschleunigungssensor gemessene Beschleunigung einen vorgegebenen Beschleunigungswert erreicht oder überschreitet. Der Treibsatz setzt Gas frei, mit welchem die Luftbremse der Sicherheitsvorrichtung entfaltet wird.

Die Erfindung wird nachstehend anhand der schematischen Zeichnungen, welche Ausführungsbeispiele und Einzelheiten davon zeigen, näher erläutert.
Es zeigen:
- Fig. 1: die Seitenansicht einer Sicherheitsvorrichtung mit einem Fallschirm als Luftbremse, im gefalteten Zustand;
- Fig. 2: die Ansicht eines geöffneten Fallschirms von unten;
- Fig. 3: die Ansicht eines anderen geöffneten Fallschirms von unten, der Reisszonen aufweist;
- Fig. 4: in einer Seitenansicht den Teil eines Schnitts durch den Fallschirm einer Sicherheitsvorrichtung;
- Fig. 5: in einer Seitenansicht im Schnitt, die Randzone durch den Fallschirm einer Sicherheitsvorrichtung im Schnitt;

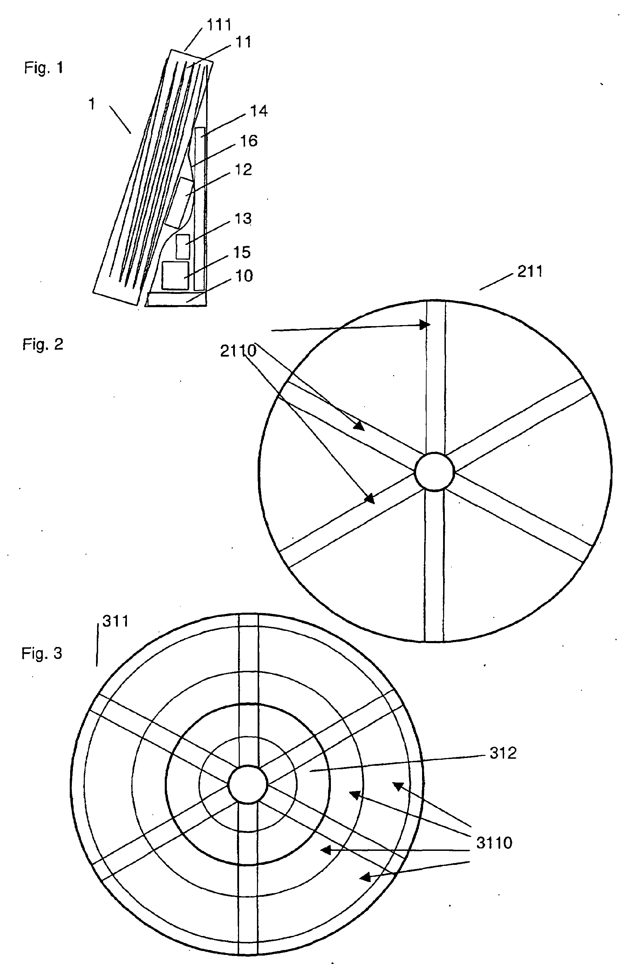

Fig. 1 zeigt eine Sicherheitsvorrichtung 1 nach der Erfindung in einer schematischen Seitenansicht. Die Einrichtung ist auf einem Tragrahmen 10 montiert. Der Tragrahmen 10 ist mit Vorteil so geformt, dass diese 1 bequem getragen werden kann, ohne dass die zu schützende Person behindert wird oder unnötig ermüdet. Die Fallbremse ist ein Fallschirm 11, der gefaltet im Behälter 111 angeordnet ist. Der Treibsatz 12 ist bei der gezeigten Ausführungsform nahe oder direkt am Fallschirm 11 angebracht und direkt oder über einen schlauchartigen Kanal mit der oder den aufblasbaren Kammern verbunden. Der Beschleunigungssensor 13 gibt seine Messwerte an die Elektronik 14, mit der Logik ab. Ein Batteriepack 15 liefert die Energie für den Betrieb der Elektronik 14 und für das Zünden des Treibsatzes 12. Eine Schutzfolie 16 schützt Elektronik 14, Sensor 13 und Batterie 15, gegen aussen aber auch gegenüber dem Treibsatz 12, bzw. seiner Wirkung. Die Schutzfolie 16 schützt aber auch die Person, welche die Sicherheitsvorrichtung 1 trägt vor der Wirkung von nach rückwärts gegen die Person fliessende und wirkende Gase.

Die Konstruktion ist tragbar, also z.B. als Rucksack, ausgestaltet. Auf die Darstellung der dazugehörenden Tragriemen, Befestigungen etc. wird verzichtet, da dies dem Fachmann ohnehin bekannt ist. Der Fallschirm, also die Fallbremse der Sicherheitsvorrichtung ist leicht angewinkelt, damit sich die Luftbremse automatisch in Richtung nach hinten, vom Kopf weg bewegt. Damit wird eine sichere Landung bestmöglich gewährleistet. Zudem wird dabei durch das Entfalten der Luftbremse schnellstmöglich eine stabile Fluglage erreicht.

Das Entfalten des Fallschirms sollte möglichst in Richtung der stabilen Fluglage erfolgen, damit das rechtzeitige Öffnen auch beim Fallen aus geringer Höhe gewährleistet ist. Zudem erfolgt die Entfaltung des Fallschirms 11 nicht direkt in Richtung des Kopfes der zu sichernden und zu schützenden Person. Damit wird diese Person selbst nicht gefährdet und das Öffnen des Fallschirms 11 wird auch nicht behindert, wenn die Person so kopfüber fällt, dass die Luftströmung des sich öffnenden Fallschirms 11 diesen in Richtung des Kopfes der Person drängt. In den durch die angewinkelte Anordnung des gefalteten Fallschirms 11 entstehenden, freie Raum wird z.B. die Elektronik angeordnet.

Die Luftbremse wird mit dem vom Treibsatz 12 freigesetzten Gas gefüllt und entfaltet. Der Treibsatz 12 setzt z.B. durch eine chemische Reaktion in kurzer Zeit genügend Energie und/oder Gase frei, so dass sich die Luftbremse, im gezeigten Beispiel der Fallschirm 11, genügend schnell entfalten kann. Nach dem Zünden des Treibsatzes 12 wird die Luftbremse einerseits vom Körper weg bewegt, andererseits entfalten freigesetzte Energie/Gase die Luftbremse, also den Fallschirm 11. Die Schutzfolie 16 schützt den Körper des Trägers, vor Verletzungen durch zur Person hin rückwärts gerichtete Kräfte oder Gasströmungen.

Die Intelligenz des Systems liegt In der Elektronik. Ein 3D-G-Sensor, d.h. ein Sensor, der Beschleunigungen in drei Richtungen oder Achsen misst, liefert der Elektronik die zur Auslösungs-Steuerung benötigte Information in Form von Signalen.

In Fig. 2 ist eine Aufsicht von unten auf einen entfalteten Fallschirm 211 gezeigt. Es ist nicht der ganze Fallschirm 211 als Gaskammer ausgebildet, sondern der Fallschirm 211 weist Kammern auf, die das für das Entfalten erforderliche Gasvolumen reduzieren. Die Kammern werden mit Vorteil als verschiedene Rippen 2110 ausgestaltet, die mit dem Gas des Treibsatzes 12 gefüllt werden. Die Rippen 2110 verlaufen hier als Durchmesser durch den Mittelpunkt des hier gezeigten Fallschirms 211. Die Rippen 2110 können jede für sich allein oder in Gruppen voneinander unabhängig und beispielsweise mit Ventilen je für sich dicht konstruiert sein. Genau so kann der Treibsatz alle Rippen 2110 mit Gas füllen oder es könnte für Gruppen oder jede einzelne Rippe oder Halbrippe (verläuft über einen Radius) mit separaten Treibsätzen aufgeblasen werden. Die Rippen könnten auch durch konzentrische Ringrippen (nicht gezeigt) ergänzt werden. Diese könnten auch mit den radial verlaufenden Rippen 2110 verbunden sein. Die Rippen 2110 führen dazu, dass bei kleinem Gasvolumen schnell eine gute Form und Formstabilität des Fallschirms 211 erreicht werden kann. Der Fallschirm 211 könnte auch nur Ringrippen und z.B. eine einzige radial verlaufende Rippe 2110 aufweisen.

Die Aufsicht von unten auf einen anderen, entfalteten Fallschirm 311 zeigt den Aufbau mit aussen liegenden Kreisringabschnitten, die als Reisszonen 3111 ausgebildet sind und mit einer innen liegenden Kreisfläche, die als Sicherheitszone 312 ausgebildet ist. Die Reisszonen 3111 sollen beim Anhängen an einem Hindernis reissen.

Somit haben diese Reisszonen 3111 den Zweck den Schaden zu begrenzen, wenn der Fallschirm 311 an irgendwelchen Gegenständen, wie Ästen, vorkragenden Gebäudeelementen, Fahnenstangen etc. anhängt, bzw. droht hängen zu bleiben. Dann soll der Fallschirm reissen und eben nicht einfach so, sondern in der Reisszone 3111. In diesem Fall, wenn dies passiert, soll der entstehende Riss in der Reisszone 3111 nur bis an die Grenze der Reisszone (=Sollbruchstelle), zur daran angrenzenden Reisszone 3111, bis zum Rand des Fallschirms 311 oder bis zur Sicherheitszone 312 verlaufen. Dort wird aufgrund der Materialwahl und / oder der Schirmkonstruktion die beschädigte Zone des Fallschirms eher abreissen, als dass andere Teile oder Zonen des Fallschirms ebenfalls beeinträchtigt und beschädigt würden.

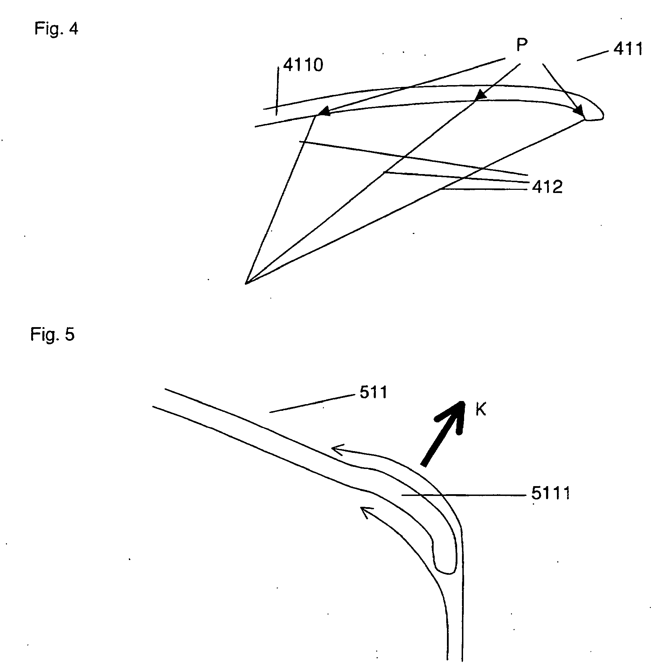

Die Sicherheitszone 312 im Zentrum des Fallschirms 311 ist so ausgelegt und konstruiert, dass sie nicht reisst, wenn der Fallschirm 311 irgendwo hängen bleibt und eine oder mehrere Reisszonen reissen, und dies auch und vor allem nicht, wenn die zu schützende Person am Fallschirm hängt. Die Sicherheitszone 312 ist so gross, wie dies für einen weitgehend gefahrlosen Flug mit sicherer Landung mit dem Fallschirm 311 erforderlich und ausreichend ist.
Für das Stabilisieren der Form des Fallschirms kann eine Multipoint-Aufhängung vorgesehen sein, wie sie in der Schnittzeichnung eines Fallschirms 411 Fig. 4 gezeigt ist. Die Leinen 412 sind nicht nur zur Peripherie des Fallschirms 411 geführt sondern beispielsweise zu mehreren Punkten P der radial verlaufenden Rippen 4110. Man spricht in diesem Fall von einer Multipoint-Aufhängung. Wenn bei einem Fallschirm, wie er z.B. in Fig. 2 gezeigt ist, zu jeder Rippe mehrere Leinen geführt sind, erhält der geöffnete Fallschirm eine gute Formstabilität. Dies ist wichtig, da sich bekannte Fallschirme sackartig aufblasen, hier aber aufgrund der aus Gewichtsgründen beschränkten Stoff- und Gasmenge eine möglichst eben verlaufende Ausbreitung des Fallschirms angestrebt wird. Dadurch wird gleichzeitig die Entfaltungsgeschwindigkeit und die Schnelligkeit der Wirkungsentfaltung erhöht.

Fig. 5 zeigt schematisch eine Teilansicht des Querschnitts eines Fallschirms 511, der in der Randzone ein Tragflügelprofil 5111 aufweist. Der im Fallen umströmte Rand erfährt zusätzlichen, den Fallschirm aufspannende Kräfte K, welche zudem zusätzlich die Fallgeschwindigkeit reduzieren und die Fluglage schneller als bei bekannten Fallschirmen stabilisieren, da immer die unten liegende Kante besser angeströmt wird, also mehr Auftrieb erfährt und erzeugt.

Das Funktionsprinzip einer Sicherheitsvorrichtung und Anforderungen welche die Sicherheitsvorrichtung erfüllen muss, werden nachstehend beschrieben.

Eine Elektronik entscheidet laufend aufgrund der von der Sensorik erhaltenen Information ob die Sicherheitsvorrichtung auszulösen ist oder nicht. Das System ist portabel, arbeitet mit Batteriespeisung und erträgt die im Alltag anzutreffenden Belastungen wie Temperaturen bis zu 100°C (in der Sonne). Falschauslösungen sind unbedingt zu vermeiden.

### Anforderungen an die Funktion und Details:

### Input und Output

Wie schon angedeutet, eignen sich als Sensoren Abreisskontakte, Beschleunigungs-Sensoren, Lagesensoren, Biosensoren die auf Änderungen des Blutdrucks und/oder psychische/seelische Spannung reagieren, wenn beispielsweise sich die Leitfähigkeit der Haut der vom Fall bedrohten Person verändert. Ein Biosensor wäre z.B. in ständigem Kontakt mit der Haut der zu schützenden Person.

Im folgenden wird der Fall des Beschleunigungssensors, insbesondere des 3-D-Beschleunigungsmessers näher beschrieben. Weiter umfasst die Sicherheitsvorrichtung einen Temperatur-Sensor, der den Temperaturzustand der Sicherheitsvorrichtung überwacht. Zudem können Kontroll-Lämpchen, z.B. grüne und rote LED's und Beeper (akustische Warner) den Bediener, bzw. die zu schützende Person über Betriebszustand u.s.w. orientieren und wenn nötig warnen.

Die Auslösung der Sicherheits- und Rettungsfunktion in Abhängigkeit von der Beschleunigung erfolgt so, dass die Elektronik laufend die vom Sensor gemeldeten Beschleunigungswerte registriert und/oder verarbeitet. Die Erdbeschleunigung ist normalerweise stets vorhanden. Bewegt sich der Träger der Sicherheitsvorrichtung, so wird vom Beschleunigungs-Sensor eine zusätzliche Beschleunigungskomponente registriert, die meist nicht dieselbe Richtung wie die Erdbeschleunigung hat. Die vom Beschleunigungs-Sensor gelieferten Signale werden in der Elektronik laufend verarbeitet und integriert. Die Integration geschieht folgendermassen:
Beschleunigung wird zu Geschwindigkeit integriert und die Geschwindigkeit wird zu Weg integriert. Die Beschleunigung wird solange integriert wie sie in der gleichen Richtung erfolgt. Liegt die Beschleunigung gleichzeitig an zwei oder drei Achsen an (Rotation), wird die Rotationsbeschleunigung von der tatsächlichen (Translation) abgezogen. Rotation und Translation können errechnet und unterschieden werden, weil die Rotationsbeschleunigung stets an mindestens zwei Achsen anliegt die Translationsbeschleunigung hingegen nur gleichzeitig an einer Achse.

Die Auslösung kann auf verschiedene Empfindlichkeitsstufen programmiert werden z.B.
sehr empfindlich
normal empfindlich
wenig empfindlich

Für jede der Empfindlichkeitsstufen ist ein separates Parameterset programmierbar, das folgende Werte überwacht:

Beschleunigung mit mindestens X₂ g auf einer Strecke von Y₂ m.

In obigen Fällen erfolgt die Auslösung, sobald diese Bedingung erfüllt ist.

Erfolgt eine Beschleunigung mit mindestens X₃ g auf einer Strecke von Y₃m, so werden die Werte Y₁ und Y₂ m reduziert, z.B. halbiert. (Abrutschen der zu schützenden Person auf schiefer Ebene, z.B. Schrägdach, bevor der freie Fall einsetzt.)

### Beispiel-Werte:

| Schwellwerte | Empfindlich | Normal | Unempfindlich |
|---|---|---|---|
| X₁[g] | 0.8 | 0.9 | 0.95 |
| Y₁[m] | 1 | 1.5 | 2 |
| X₂[g] | 0.7 | 0.8 | 0.9 |
| Y₂[m] | 1.5 | 2 | 2.5 |
| X₃[g] | 0.1 | 0.2 | 0.3 |
| Y₃[m] | 1.6 | 2 | 2.5 |

In folgenden Fällen wird die für die Auslösung zurückzulegende Wegstrecke um Z₁ m verlängert:
- Die Beschleunigung wechselt die Richtung exakt in die umgekehrte Richtung: Es wird dann angenommen, dass der Träger mit der Sicherheitsvorrichtung zuerst hochgesprungen sei. Der für die Auslösung benötigte Weg wird um die hochgesprungene Wegstrecke verlängert.

Die Sicherheitsvorrichtung ist für den Einsatz in einem bestimmten Temperaturbereich bestimmt. Die Temperaturgrenzwerte können je nach Ausführung variieren und beispielsweise im Bereich von -20° - + 60°C liegen. Bei Temperaturen ausserhalb dieses Bereichs kann eine Warnung an den Benutzer erfolgen.

Schliesslich kann die Schaltung so ausgelegt sein, dass sie sich ständig selbst überwacht (Funktionscheck). Dies kann beispielsweise wie folgt geschehen:

Alle Schaltkreise sind fehler-redundant ausgelegt. Die Stromversorgung ist zu überwachen oder ebenfalls redundant vorzusehen. Nach dem Einschalten werden alle Gerätefunktionen geprüft. Ist die Sicherheitsvorrichtung betriebsbereit, wird eine grüne LED eingeschaltet. Ist die Sicherheitsvorrichtung nicht betriebsbereit, werden eine rote LED und ein Beeper aktiviert. Die Schaltkreise wie auch die Stromversorgung werden auf Fehlfunktionen permanent überprüft und jedes Fehlersignal wird sofort mit Lichtsignalen und/oder akustischen Signalen gemeldet. Normale Spannung an Stromquellen wird durch grün leuchtende LED quittiert. Unterspannung an einer Stromquelle wird durch blinkende LED quittiert. Ist die Unterspannung an einer Quelle kritisch, wird parallel zur blinkenden grünen LED eine konstante rote LED eingeschaltet. Liegt an mehreren Quellen Unterspannung an, so erfolgt eine akustische Alarmierung und die Elektronik des Schutzes und damit natürlich der Schutz schaltet sich selbst aus. Dies sind beispielsweise Massnahmen, die in der Sicherheitskonstruktion berücksichtigt werden können.

## Patentansprüche

1. Tragbare Sicherheitsvorrichtung (1) für Personen, mit einer gefalteten Luftbremse (11) und einer Einrichtung zum Entfalten der gefalteten Luftbremse (11), und mit einem Treibsatz (12), der zum Entfalten der Luftbremse (11) Gas oder Energie freisetzt und welcher durch eine elektronische Schaltung (14) ausgelöst wird; **dadurch** gekennzeicknet, daß die Auslösung aufgrund der Auswertung der Signale eines Beschleunigungssensors (13), eines Lagesensors und/oder eines Distanzmessers erfolgt, wobei der Distanzmesser die Distanz zum Bodendirekt erfaßt.

2. Sicherheitsvorrichtung nach Anspruch 1, mit Stabilisierungsleinen (412), zum Stabilisieren der Form der geöffneten Luftbremse mit einer Multipoint-Aufhängung.

3. Sicherheitsvorrichtung nach einem der Ansprüche 1 bis 2, mit einer Luftbremse (311) die Reisszonen (3111) aufweist.

4. Sicherheitsvorrichtung nach einem der Ansprüche 1 bis 3, mit einer Luftbremse (311) die eine Sicherheitszone (312) aufweist.

5. Sicherheitsvorrichtung nach einem der Ansprüche 1 bis 4, bei welchem die Randzone der geöffneten Luftbremse (511) als Flügelprofil (5111) ausgebildet ist.

## Claims

1. Wearable safety device (1) for persons, with a folded air brake (11) and a device for unfolding the folded air brake (11) and with a propelling charge (12), that sets free gas or energy to unfold the air brake and that is triggered by an electronic circuitry (14); marked by the fact, that the triggering is done based on the evaluation of the signals of an acceleration sensor (13), a position sensor and/or a distance measuring unit, whereas the distance measuring unit directly grasps the distance to the ground.

2. Safety device according to claim 1, with stabilizing ropes (412), to stabilize the form of the unfolded air brake by a multi point suspension.

3. Safety device according to claim 1 to 2, with an air brake (311) that has breaker lines (3111).

4. Safety device according to claim 1 to 3, with an air brake (311) that has a safety zone (312).

5. Safety device according to claim 1 to 5, on which the border zone of the opened air brake (511) is shaped as wing profile (5111).

## Revendications

1. Système de sécurité portable (1) pour personnes, avec un frein d'air (11) plié et un mécanisme pour déplier le frein d'air (11) plié et avec une charge de propulsion (12), qui libère du gaz ou de l'énergie pour déplier le frein d'air et qui est déclenché par une électronique (14); marqué par le fait que le déclenchement est fait par une évaluation des signaux d'un capteur d'accélération (13), un capteur de position et/ou une unité pour mesurage de distance qui saisi directement la distance au sol.

2. Système de sécurité selon revendication 1, avec corde stabilisantes (412), pour stabiliser la forme du frein d'air déplié à points multiples.

3. Système de sécurité selon revendications 1 à 2, avec un frein d'air (311) possédant des lignes de ruptures (3111).

4. Système de sécurité selon revendications 1 à 3 avec un frein d'air (311) qui possède une zone de sécurité (312).

5. Système de sécurité selon revendications 1 à 4 du quel la zone extérieure du frein d'air (511) est formée comme une aile (5111).
